# EUROPEAN PATENT APPLICATION

(11) **EP 1 544 746 A2**
(43) Date of publication of application: **22.06.2005**
(21) Application number: 04029091.8
(22) Date of filing: 08.12.2004
(51) Int. Cl.: G06F 17/27

(54) **Creation of normalized summaries using common domain models for input text analysis and output text generation**

(30) Priority: 18.12.2003 US 737976
(71) Applicant: Xerox Corporation, Rochester, New York 14644 (US)
(72) Inventor: Brun, Caroline, 38000 Grenoble (FR); Chanod, Jean-Pierre, 38000 Grenoble (FR); Hagege, Caroline, 38000 Grenoble (FR)
(74) Representative: Grünecker, Kinkeldey, Stockmair & Schwanhäusser Anwaltssozietät

(57) **Abstract**

Normalized output texts, such as rundowns or summaries, from raw texts belonging to a given domain are produced. The normalized output text may be generated in different languages and may take into account a user's interest. To this end, linguistic resources associated with a model of the domain are used both for input text analysis and output text generation.

## Description

### BACKGROUND OF INVENTION

The present invention generally relates to the field of text processing including information extraction and more particularly to the generation of a reduced body of text, such as a summary containing relevant information provided in a natural language.

The development of electronic data processing systems in combination with storage media of immense capacity provides the potential for storing data in virtually infinite amounts and thus renders it increasingly difficult to extract relevant information from these data that is required for specified applications. The problem of selecting relevant pieces of information from an oversupply of information is even exacerbated by the rapid development of powerful networks, enabling high data transmission rates at moderately low cost. Hence, the creation and distribution of information, which is commonly per se considered a positive characteristic in view of social, economic, and scientific aspects, may become a problem since it may be extremely difficult and time consuming to assess and evaluate the information provided for a field of interest. Hence, last and reliable techniques for "screening" information, for instance provided in the form of text from sources like the Internet, intranets, digital libraries, and the like, are of great importance, and considerable efforts have been made to develop techniques for extracting and obtaining the information needed.

The availability of powerful electronic tools, such as computers and networks, allows access to various kinds of information by various types of users who may have quite different requirements, different levels of education and expertise with respect to the type of information they wish to gather. For instance, if a person has health problems and is interested in finding information about his/her health status and possible therapies, a large amount of information, though accessible to the person, may not, however, be taken into consideration owing to a lack of expertise, which may reside in the fact that the person may not understand the language in which the information is provided, or the person may not be familiar with the terminology typically used in this field. Therefore, techniques have been developed so as to provide a text summary or abstract for one or more bodies of text in a comprehensible manner and in fluid natural language, thereby enabling the user to assess whether the full text should be consulted or not.

Document summarization is a well-established technique in the field of written texts, such as journal articles and the like, wherein an abstract is provided along with the article. However, summarizing the contents of a text that is not provided with a precise and comprehensible abstract is a time-consuming task and requires skill and experience of the person summarizing the text. Frequently, the text to be evaluated may include a plurality of different aspects, which are differently weighted by the author, while an interested user may have completely different priorities with respect to the importance of some aspects of the text which may be incompletely only or not at all reflected in the provided abstract. For these reasons, a great deal of research has been done so as to provide user specific text summaries.

For instance, in "Text Generation from Message Understanding Conference Templates", PhD thesis by Nicola Cancedda, University of Rome, 1999, a method is disclosed to generate text using MUC (Message Understanding Conference) templates resulting from an information extraction system. The architecture proposed allows the generation of text from MUC templates and thus makes the template content directly accessible. However, the text generation based on MUC templates may not guarantee that for any MUC template a corresponding natural language text will be generated properly, thereby rendering this technique unreliable for certain applications.

"Multi lingual Summarization by Integrating Linguistic Resources in the MLIS-MUSI Project", by Alessandro Enzi, et al., Proceedings of the Third International Conference of Language Resources and Evaluation, May 29-31, 2002 in Spain, describes an automatic abstract production with multilingual output. The method is based on sentence extraction using pattern matching of expressions, user query processing, and sentence positions. Appropriate weights are assigned to sentences according to these parameters wherein the linguistic tools are then used to construct a conceptual representation from the sentences selected, wherein the representation then serves as an input for the text generator. Although the summarization is intended as a query biased process, thereby allowing the identification of user-specified information, this method relies on a statistic-based module for relevant sentence extraction, and hence may not provide for the required flexibility in the text analysis.

In "Using Information Extraction and Natural Language Generation to Answer Email" by Leila Kossein, et al., Fifth International Conference on Application of Natural Language to Information Systems, Versailles, France, 2001, a system is presented that combines the information extraction, extraction based summarization, and natural language generation to support user directed multi-document summarization. The information extraction phase is based on machine learning techniques, wherein a multi-document input text is worked with that requires a merging method, thereby rendering this approach complex and less flexible.

In U.S. Patent Application Publication No. 2002/0078090 Al, by Chung-Hee Hwung et al., entitled "Ontological Concept Based User Centric Text Summarization", a method and a system are disclosed using a domain ontology to extract concepts. During the generation of the output text, a classical sentence selection method is used, thereby rendering this system less flexible with respect to the generation of output texts having a "level", for instance in terms of type of language and/or terminology with respect to the input text.

In view of the situation described above, a need continues to exists for an improved technique that allows an efficient and reliable generation of an output text, possibly in a reduced version, for a given input text while at the same time providing for the potential of "adjusting" the content, the level of expertise (i.e., the terminology, or the language) of the output text.

### SUMMARY OF INVENTION

The present invention is generally directed at a technique that enables the generation of a normalized summary or rundown from one or more raw texts belonging to a given domain. These rundowns or summaries may be generated in a natural language at different levels, that is, the terminology used in the raw text may be altered on the basis of specified criteria and/or the rundowns or summaries may be presented in one more different languages. Moreover, the technique according to the present invention provides the potential for selecting one or more criteria by a user so as to reflect the user's interests in the output text. Generally, the present invention is based on the concept that linguistic resources associated with a model of the domain that the one or more raw texts belong to are commonly used for an input text analysis and the output text generation.

According to one illustrative embodiment of the present invention a method of generating a body of text from an input text comprises establishing a domain model of the input text and associating at least one linguistic resource with the established domain model. Furthermore, the input text is analyzed on the basis of the at least one linguistic resource and then, depending on a result of the analysis of the input text, the body of text is generated on the basis of the at least one linguistic resource.

In this illustrative embodiment, one or more texts of a specified domain may be analyzed by using a model created for the specified domain, wherein the model may include well-defined or "salient" concepts and respective interactions or relations of these concepts. The relations or interactions may be represented by informative structures, which may, in a first step, be "filled" or instantiated by means of a linguistic analysis of the one or more input texts. The results of the linguistic analysis, i.e., the instantiated informative structures, then feed an automatic text generator so as to provide a natural language output of the input text. Since the output text generation is based on the linguistic analysis, the output text generation may be normalized and may be performed in a "parallel" fashion, thereby offering the potential for translating the contents of interest of the input text into different languages or different terminologies. For instance, information of interest contained in one or more input texts of the specified domain may be provided in a plurality of different natural languages so as to allow a user to screen texts written in a language which is unfamiliar to him/her. Similarly, the output text generation on the basis of the linguistic analysis enables in addition or alternatively to providing different natural languages to adapt the terminology of the domain text to, for instance, a user-specified or otherwise selected level of expertise or different terminology. For example, highly specific texts may be rendered accessible by an average person by correspondingly establishing the model of the domain or by providing a corresponding interaction grammar at the text generation section so as to "translate" the highly specific language to a language comprehensible by a non-expert. Moreover, performing the output text generation on the basis of the linguistic resources established for the input text analysis, a proper output text is guaranteed for every instantiated informative structure produced by the input text analysis. Consequently, the principle of commonly using the linguistic resources associated with the domain model for both input text analysis and output text generation provides for an increased flexibility compared to conventional systems in which typically the linguistic analysis is omitted or limited to a superficial chunking.

In a further embodiment of the present invention, the domain model is established by defining a plurality of concepts and defining one or more relations for at least one of the concepts. The definition of concepts and relations thereof provides an effective means to represent, for instance, properties and functions that are attached to any domain entities or interactions between any domain entities.

In a further embodiment, the method comprises defining, as a linguistic resource, at least one informative structure representing the one or more relations. Hence, by defining the informative structure an effective means is provided for extracting and conveying information of interest during a subsequent analyzing step.

In a further embodiment, the at least one informative structure is defined in accordance with a user's interest. Hence, specific requirements on the contents to be extracted from the input text may readily be met by correspondingly defining the informative structure. The defining of the informative structure may readily be performed in advance when user or application specific requirements on the desired information are known ahead of time.

In a further embodiment, one or more informative structures are selected from the at least one informative structure by a user so as to specify information of interest. Hence, the provision of a plurality of informative structures, which may be selected by a user in conformity with their interests, a high degree of flexibility in screening input texts of the specified domain is achieved. Moreover, the selection of specified informative structures may be carried interactively or in advance, wherein particularly the interactive selection allows for an "immediate" response to the result of the presently or a previously obtained output text. The selection of an appropriate informative structure may be accomplished by directly selecting the structure of interest or by using representatives or symbols related to the informative structures.

In a further embodiment, the at least one linguistic resource includes one or more lexicons and/or one or more thesauri and/or one or more terminological resources and/or one or more entity recognizers to identify at least one basic concept of the domain model.

By providing one of these linguistic resources, powerful and efficient means are provided so as to analyze the input text. For instance, the provision of terminological resources enables the identification of concepts and/or interactions of these concepts even if provided with different technical languages or different levels of expertise of a technical language. Moreover, the provision of one or more of the above-identified linguistic resources may provide, in combination with a translator, the potential for entering input texts of different languages for the specified domain.

In a further embodiment, the method comprises identifying an equivalence between a first lexical or syntactic structure and a second lexical or syntactic structure when the first and second lexical or syntactical structures are associated with the same relation of the one or more relations associated with the one or more concepts.

The identification of equivalent lexical or syntactic structures provides for the potential of analyzing the input text in a highly flexible fashion and/or enables the adaptation of different levels of a technical language. For example, one or more equivalencies between first and second structures may be identified that relate a highly specified technical phrase to a more comprehensible "conversational" phrase, although both the first and the second structure may refer to substantially the same relation, i.e., interaction, function, properties, and the like of a specified concept.

In a further embodiment, the method further comprises establishing a representation of the identified equivalencies as an element of the at least one linguistic resource. By providing an appropriate representation of the identified equivalencies as one of the linguistic resources, the identified equivalencies are a part of the input text analysis and may assist in actually analyzing an input text so as to provide for an increased "coverage" of the input text with respect to information of interests and/or provide for the potential of adapting the input terminology to a desired output terminology.

According to a further embodiment, the step of analyzing the input texts comprises recognizing a basic concept in the domain model and extracting a syntactic relation involving the basic concept. Moreover, the extracted syntactic relation is normalized on the basis of lexical and structural equivalencies associated with the domain model.

As previously pointed out, the recognition of a basic concept and the extraction of a syntactic relation associated with the basic concept in the input text enables a highly efficient method for normalizing the extracted syntactic relation especially when a set of lexical and structural equivalencies is provided in combination with the domain model by, for instance, instantiating any informative structures associated with the extracted syntactic relation.

In a further embodiment, the definition of informative structures representing the one or more relations, the definition of structural equivalencies associated with the domain model, the parsing of the input text, the normalization of the parses of the input text according to the defined structural equivalencies and the instantiation of the one or more informative structures is accomplished by the same formalism.

Hence, a high degree of compatibility of the individual steps in analyzing the input text in accordance with the domain model is obtained by using the same formalism for the above-specified process steps.

In a further embodiment, the generation of the body of text further comprises receiving an informative structure representing one or more of the relations, wherein the informative structure is instantiated during the analysis of the input text. Then, the body of text is generated on the basis of the domain model and the instantiated informative structure.

As a consequence, since the body of text is generated on the basis of the domain model and its associated linguistic resources, a proper formalization of the body of text is guaranteed for any instantiated informative structure supplied thereto.

In another embodiment, the method further comprises the retrieval of a textual element from the input text, wherein the textual element is associated with an instantiated informative structure.

In this way, textual elements such as clauses, modifiers, neighboring sentences, etc. appearing in the context of a specified instantiated informative structure may be achieved, even if the textual element is not selected as an argument in instantiating the specified informative structure. For instance, relevant information may be contained in a sentence that does not directly refer to a basic concept, but instead a pronoun may be used in this sentence. The sentence containing the pronoun may nevertheless be retrieved for further analysis, even though instantiating a corresponding informative structure requires the basic concept as an argument of the informative structure.

In a further embodiment, one or more textual elements outside of the informative structure are selected as contextual elements for the informative structure, wherein the body of text is also generated on the basis of the selected contextual elements.

In this way, the body of text produced may be enriched or complemented by using the selected contextual elements so that normalized, possibly translated, text may be provided within its original context~

In a further embodiment, a second body of text is generated for the contextual elements by means of a text generator that is based on a model other than the domain model. By providing the second body of text, the output text based on instantiated informative structures may be provided vis-â-vis the second body of text representing the contextual elements, wherein the second body of text is not controlled by the established domain model. For instance, a controlled and non-controlled translation of output text may be provided at the same time.

In a further embodiment, the body of text is edited upon user request. Preferably, the request for amendment may be entered interactively so as to provide a high degree of flexibility in creating an output text containing the required information. In other embodiments, the request for editing the body of text may be supplied in advance, wherein specific criteria regarding the desired amendments may be stored and activated upon completing the body of text or upon providing the body of text. For instance, editing the body of text may merely include amendments of the text format, or in other cases may, additionally or alternatively, semantic and/or syntactic amendments.

In a further embodiment of the present invention, a system comprises a storage element containing data representing a model of a specified domain and representing linguistic resources associated with the domain. Moreover, an input text analyzer is operatively connected with the storage element, wherein the input text analyzer is configured to receive an input text and provide normalized informative structures representative of at least a portion of the input text on the basis of the linguistic resources and the domain model. Furthermore, the system comprises an output text generator configured to receive normalized informative structures from the input text analyzer. The output text generator is further configured to provide natural language output text on the basis of the informative structures and the linguistic resources.

The system of the present invention is thus configured to perform the methods as specified above, thereby providing substantially the same advantages.

### BRIEF DESCRIPTION OF DRAWINGS

These and other aspects of the invention will become apparent from the following description read in conjunction with the accompanying drawings wherein the same reference numerals have been applied to like parts, and in which:

Figure 1 A schematically shows functional blocks involved in one illustrative embodiment of the present invention;

Figures 1B-1D schematically show flow diagram representing the functional blocks of Figure 1 A in accordance with further illustrative embodiments of the present invention;

Figure 2 illustrates a system for performing the methods of input text analysis and output text generation as described with reference to Figures IA-ID; and

Figures 3A-3C illustrate an example input text and corresponding informative structures and multilingual output text according to one illustrative example of the present invention.

### DETAILED DESCRIPTION

As summarized, the present invention is based on the concept of analyzing an input text and providing an output text in natural language, wherein in many applications the output text may be reduced in volume compared to the input text. Thereby, in some embodiments, the reduction in volume is related to application and/or user specific criteria. Moreover, it is to be noted that the term "text" as used herein is to be understood as a definite amount of information that may be conveyed by natural language, irrespective of the specific representation of the amount of information. That is, an input text according to the present invention may represent information conveyed by natural language in the form of speech, a written text, or coded data that may be readily converted or reconverted into comprehensible text, i.e., in speech or written text. Thus, an audio file including information containing a text passage may be considered as an input text. Since text specific information is typically looked for and extracted from text portions in written form, in the following detailed description a written text is referred to wherein it should be borne in mind that the term "text" may be used in the more general form as described above unless otherwise explicitly set forth in the appended claims.

Figure IA schematically illustrates a basic configuration 100 according to one illustrative embodiment, showing the functional dependencies between a functional block 110, representing a domain model, a functional block 140, representing an input text analysis, and a functional block 1 80, representing an output text generation. The domain model 110, containing at least one linguistic resource, is linked to the input text analysis (or input text analyzer) 140 and the output text generation (or input text generator) 180 in that the at least one linguistic resource is commonly used by both the input text analysis 140 and the output text generation 180. When performing a text analysis so as to produce a body of text 130 by means of the configuration 100, in some embodiments the domain model 110 may be established on the basis of a specified input text or a plurality of input texts 120, or may be established without referring to a specific input text, wherein application specific and/or user specific concepts and associated relations are established. Hereby, "concepts" are to be understood as expressions representing a specified meaning within the specified domain. For instance, in the domain of biology the term "mammal" may represent a concept, which may have specified relations, such as "eating nuts", "living in trees", to other concepts, such as "food", "natural habit".

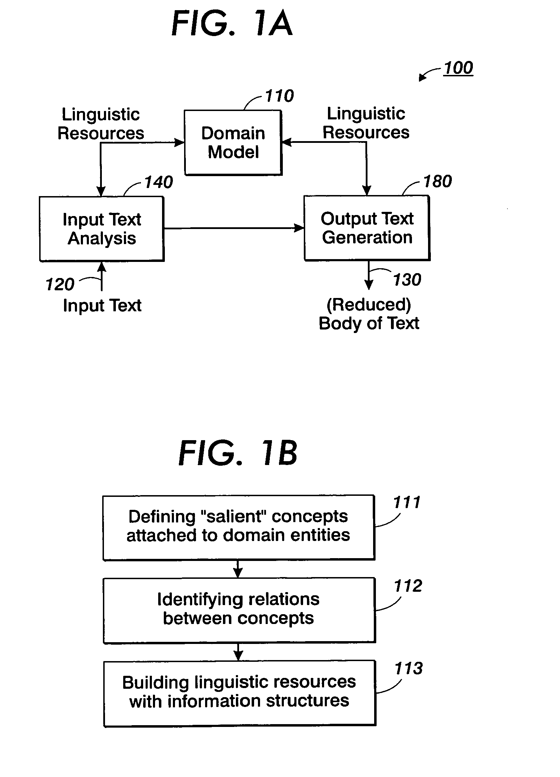

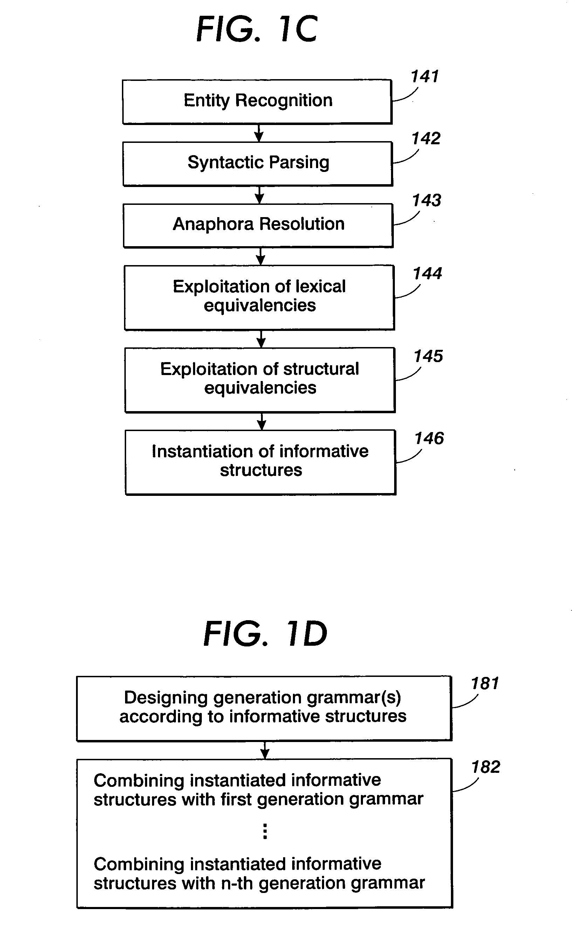

Figure 1B schematically shows a flow diagram of the "modeling" of a specified domain in accordance with illustrative embodiments of the present invention. Domain modeling may be carried out at one specific instance in time and/or at recurring intervals based on a predefined occurrence, such as, an elapsed time interval, detection and/or notification of new/changed data in a data store used for defining the domain model of a specified domain, or receipt of input text 120 with no existing and/or dated domain model. Further data used to carry out domain modeling may be performed using central and/or distributed stores of information that may be updated and/or automatically or manually accumulated (e.g., using a search engine, web crawler, etc.).

In a first step I11, prominent or salient concepts attached to any domain entities are defined. These salient concepts may be represented by specified product types, such as toxic chemical agents, wherein the concepts may be organized in any parallel or hierarchic structure. For instance, if 'toxic chemical agent' represents a basic concept, 'natural chemical agents' and 'manufactured chemical agents' may represent concepts that are hierarchically arranged below the basic concept. However, the concepts of the domain model may be defined and selected in any manner appropriate for a specified application and/or specified user's interests. The definition and recognition of the salient concepts of a specified domain may be performed on the basis of a given input text so as to provide a high degree of "coverage" of information contained in the input text, wherein in other embodiments the salient concepts may be established without referring to a specified input text. In this case, a reference to one or more specified texts, serving as illustrative examples of the specified domain, may facilitate the extraction of salient concepts.

In a next step 11 2, relations between the concepts may be identified, wherein these relations may represent, for instance, properties and functions attached to the domain entities or may represent interactions between such entities. The identification of the relations in step 112 may, in combination with the definition of the salient concepts, provide for a first means for controlling "amount" and "direction" of an "information vector", that is, the accuracy and the topic of information to be extracted in a subsequent text analysis step, since the diversity of the relations in combination with the diversity of the concepts basically determines the degree of information extraction and thus the diversity of different topics that may be addressed by a user. For instance, if only a few toxic chemical agents are identified and only a few properties of each of the toxic chemical agents are specified as relations, the subsequent text analysis is substantially restricted to these few chemical agents, irrespective of whether the user actually aims at obtaining information on other chemical agents.

In step 113, one or more linguistic resources are built such that these resources reflect the domain model and possibly the interests of a user. The linguistic resources may include thesauri, lexical and terminological resources, entity recognizers, and grammars associated with the concepts. Moreover, the linguistic resources comprise informative structures representing at least some of the relations between concepts, wherein the definition of the informative structures may be made in conformity with application specific requirements and/or user specific requirements. That is, assuming that a sufficient variety of concepts and relations is defined and identified in the steps 111 and 112, the building of informative structures or the selection of informative structures after building the same enables control of the information extraction according to application specific and/or user specific requirements. The informative structures are "filled" (i.e., instantiated) with particular values or arguments during the input text analysis 140 so as to convey extracted information in a normalized fashion. The linguistic resources including the informative structures thus define the "information vector space" of the associated domain model, i.e., they represent the type of information that can be extracted and the corresponding accuracy. In combination with the domain model, the linguistic resources also represent an important portion of the input text analysis 140 and the output text generation 180.

Figure 1C schematically shows a flow diagram illustrating the input text analysis 140 in accordance with one illustrative embodiment of the present invention. The goal of the input text analysis 140 is to obtain the specialization of informative structures, i.e., the instantiation of these structures with lexical elements representing specified concepts in the input texts. This may be accomplished by recognizing within the input text the textual elements, such as named entities, argument structures, and the like, which can be associated with informative structures defined during the domain modeling phase in step 113. In the illustrative embodiment of Figure 1C, the input text analysis 140 may include a first step 141 in which named entities are recognized in the input text. In step 142, a syntactic parsing may be performed by any appropriate parser. In one embodiment, the syntactic parsing is performed using an incremental parser as described in the following publications, which are incorporated herein by reference and referred to herein as the Xerox Incremental Parser Publications: U.S. Patent Publication 2003/0074187 Al, by AitMokhtar et al., entitled "Natural Language Parser"; Ait-Mokhtar et at., "Incremental Finite-State Parsing", Proceedings of Applied Natural Language Processing, Washington, April 1997; and Ait-Mokhtar et al., "Subject and Object Dependency Extraction Using Finite-State Transducers", Proceedings ACL'97 Workshop on Information Extraction and the Building of Lexical Semantic Resources for NLP Applications, Madrid, July 1997. Moreover, in step 143, an anaphora resolution may be performed, that is, references to a named entity by means of a pronoun may be detected and may be assigned to the corresponding entity. Furthermore, in step 144 lexical equivalencies, such as synonymy and other thesaurus links, may be exploited. For instance, equivalent names for a toxic chemical agent may be identified and may be related to the corresponding entity. In step 145, structural equivalencies defined during the domain modeling phase may be detected and resolved so that utterances conveying substantially the same information may be normalized in a unique manner, that is, text elements with different structures may be identified as equivalent so that the same value may be assigned to these equivalent structures. Finally, in step 146 informative structures are instantiated, i.e., corresponding values obtained in the previous steps 141 to 145 are assigned to one or more informative structures that are selected as relevant in view of a specified application or in view of the user's interest. After the instantiating of the informative structures or a selected portion thereof, when it is desired to only search a part of the "information vector space" defined by the informative structures - the information of interest is contained in these structures in a normalized manner and may now be further processed.

Figure ID schematically shows a flow diagram illustrating the output text generation 180 in accordance with one illustrative embodiment of the present invention. Generally, the output text generation 1 80 aims at generating a coherent body of text, possibly in a standardized form with respect to stylistic and/or formal aspects, for instance, provided in one or more languages and/or provided in one or more different levels of terminologies, from the instantiated informative structures obtained in step 146 of the input text analysis 140. To achieve this task, one or more generation grammars, for instance a plurality of multilingual generation grammars, may be provided and may be adapted or designed according to the domain model 110, and hence, in accordance with the linguistic resources such as the informative structures and lexical information. In this way, a certain portion, corresponding to the selected "information vector space" determined by the instantiated informative structures, of the information conveyed by the specified domain is obtained in natural language or languages, or technical languages. Hence, in a first step 181, one or more corresponding generation grammars are designed in accordance with the informative structures such that each designed generation grammar is able to provide a normalized output text in a specified natural language, which may, in some embodiments, contain a selectable standard of a technical language with respect to the application and/or user's interest under consideration. In step 182, the one or more generation grammars are combined with the instantiated informative structures contained in step 146 during the input text analysis 140. The instantiated informative structures convey the information expected by the generation grammars since the generation grammars are designed by referring to the domain model and, in particular, to the informative structures, to produce the final body or bodies of text. Since the informative structures normalize the meaning expressed by the input text, the generated body of text represents a natural language normalization of some utterances present in the input texts. Moreover, the design of the generation grammar with respect to the informative structure, i.e., the linguistic resources, of the domain model guarantees that an appropriate body of output text is created for any information conveyed by an instantiated informative structure.

In some embodiments, the instantiated informative structures may be evaluated prior to being supplied to the output text generation so as to allow a rejection or scoring of informative structures. For instance, a user or an application may require the screening of a large amount of input texts, wherein merely the summarization of highly relevant text portions is considered appropriate. In this case, a "relevance level" may be defined and selected, interactively or in advance, so as to avoid the generation of undesired output texts when an informative structure does not match the relevance level. A corresponding relevance level may be established on the basis of the degree of instantiation of one or more specified informative structures or on the number of instantiated informative structures, and the like. For example, if an input text results in a low number of instantiated informative structures and/or when a specified type of informative structure is only filled with a number of arguments that is considered too low, the creation of an output text may be denied so as to save on computational resources and to not overburden the user. Hence, for the screening of a large amount of input texts, an output text generator is not unduly occupied by the generation of less relevant output texts. Moreover, the output text generation may be delayed until the relevance level of each of a plurality of input texts is established, thereby also saving on computational resources.

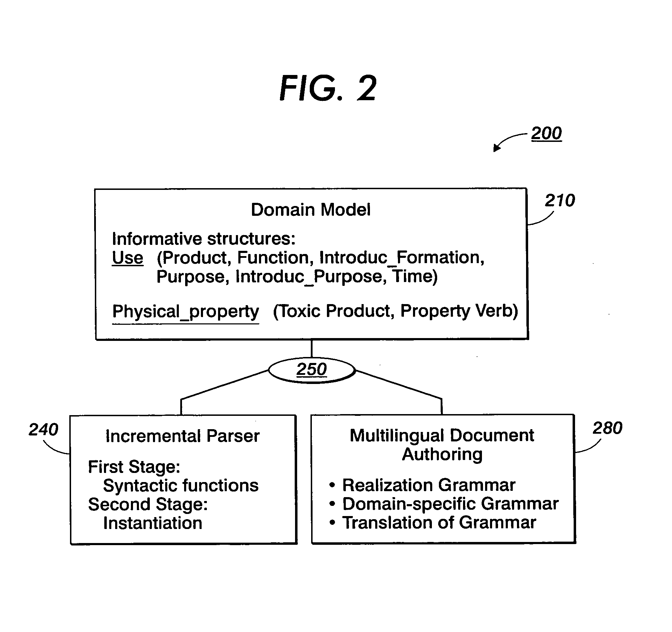

With reference to Figure 2, a system 200 illustrating an embodiment similar to those described with reference to Figures 1A-1D will now be described in more detail. The system 200 comprises a storage element 210 configured to receive and store data representing a domain model and linguistic resources associated therewith, wherein the linguistic resources include informative structures corresponding to the domain model, the application and/or user interests. In the illustrated example, the particular domain model is based on texts presenting toxic products, wherein these texts may be obtained by any means, such as accessing information sources via the Internet. One source for these texts is the web site of the Agency for Toxic Substances and Disease Registry (ATSDR). Based on these texts, the main concepts and relations have been defined, wherein the recognition and definition of the concepts and relations may enable the creation of a specialized lexicon associated with the concepts relevant to the chemistry of toxic products. Thus, the relations and concepts represent the toxic product, the chemical properties thereof, uses, dangers, origin of these products, and the like. Based on these relations and concepts, information of interest, for instance in the form of small normalized texts are to generated to identify the toxic products, their physical aspects, such as color and smell, their physical properties, such as gas, liquid, and the like, their origin, such as natural or manufactured, and their current use in the present and/or in the past. It should be appreciated, however, that this list of concepts and relations is arbitrary and substantially determines the potential for information retrieval, accuracy, and controllability with respect to a user's interest. If, for instance, and as in this example, application specific criteria or user interests are known in advance, the corresponding concepts and relations may reflect these preferences. From these relations and concepts, a corresponding number of informative structures are defined to provide an "information vector space" reflecting the domain, wherein the informative structures may be designed to be selectable upon user interaction so as to allow the user to navigate within the "information vector space".

An example of an informative structure is denoted as *use* (product, function, introduction-function, purpose, introduction-purpose, time), wherein: the argument 'product' has to be instantiated with the name of the toxic product described; the argument 'function' has to be instantiated with a nominal expressing its function; the argument 'introduction-function' represents the correct preposition used in generating an output text so as to correctly introduce the name of the product conveyed by the argument product; the argument 'purpose' has to be substantiated with a nominal expression describing the purpose of the use of the toxic product; the argument 'introduction-purpose' represents the correct preposition to be used during the generation of output text so as to correctly introduce the name conveyed by the argument purpose; and the argument 'time' is to be instantiated as present or past, depending on whether the produce is still being used or not. Another example of an informative structure is denoted as *physical-property* (toxicproduct, propertyverb), wherein the argument 'toxicproduct' is to be instantiated with the name of the toxic product, and the argument 'propertyverb' is to be instantiated with a verb characterizing a physical property of the product.

It should be noted that some of the informative structures defined may not necessarily be "filled" or instantiated with respect to all arguments if the text does not provide all the information of interest. Moreover, two or more informative structures of the same type may be instantiated if the text refers to two or more relations, which the informative structure refers to. For instance, the same toxic product may readily burn and may readily evaporate so that two informative structures of the type physical-property may be instantiated. It should be appreciated that the system 200 may comprise any means for establishing the linguistic resources and the informative structures and provide them to the storage element 210 in any appropriate representation required for the further usage during the text analysis and the text generation.

The system 200 further comprises a text analyzer, which is embodied in the present example as the incremental parser described in the Xerox Incremental Parser Publications detailed above. The incremental parser offers a formalism that, among other things, enables the extraction of syntactic dependencies between lexical units in a text. Domain specific lexical knowledge, that is, names of chemical elements, color names, and the like, which are derived from the domain model, are implemented in the text analyzer 240. Moreover, structural equivalencies may be implemented in the analyzer 240 by identifying pertinent facts and relations in the domain. For instance, expressions like "the product is flammable" and "the product bums easily" are considered as semantically equivalent to convey the information that a product can burn. It should be noted that a plurality of structural equivalencies may be coded and implemented into the incremental parser. For instance, correspondingly coded equivalencies may also be used to adapt different levels of a technical language. For example, the expression "the product has a high activation energy" may be considered equivalent to the expression that "the product does not react easily with other products".

The system 200 further comprises an output text generator 280, which may be provided in the form of an interactive high-level document authoring system. In one example, the high-level document authoring system may be designed for assisting monolingual writers in the production of controlled multilingual or monolingual documents. The high-level document authoring system used in this example enables to interactively establish documents under the control of the system, wherein the semantic consistency is a result of possible choices of the user.

In one embodiment, the high-level document authoring system is the MDA (Multilingual Document Authoring) system developed by Xerox Corporation which is described in U.S. Patent Application entitled "Systems And Methods For Semantic Stenography" by Dymetman et al., as well as in, the following references, which are incorporated herein by reference: Caroline Brun, Marc Dymetman, Veronika Lux, "Document Structure and Multilingual Text Authoring", in the Proceedings of INLG'2000, Mitzpe Ramon, Israel, 2000; Marc Dymetman, Veronika Lux, Aarne Ranta, "XML and Multilingual Document Authoring: Converging Trends", in the Proceedings of COLING'2000, Saarbrucken, Germany, 2000; Aurelien Max, Marc Dymetman, "Document Content Analysis through Fuzzy Inverted Generation", in AAAI 2002 Spring Symposium on Using (and Acquiring) Linguistic (and World) Knowledge for Information Access, Stanford University, United States, 2002; Marc Dymetman, "Document Content Authoring and Hybrid Knowledge Bases", in the Proceedings of KRDB-02 (Knowledge Representation meets Knowledge Bases), Toulouse, France, 2002; and Marc Dymetman, "Text Authoring, Knowledge Acquisition and Description Logics", in the Proceedings of COLING-02, Taiwan, August 2002.

This MDA high-level document authoring system is further configured to extend conventional syntax driven editors so that semantic choices down to the level of words are possible when authoring the document content. Moreover, dependencies between distant parts of the document can be specified in such a way that a change in one part of the document is reflected in a change in some other part of the document. The content of a document is described within the MDA high-level document authoring system in a formalism denoted as interaction grammar, which is derived from Prolog's definite clause grammars (DCC). In the present example, the interaction grammar of the output text generator 280 is designed in conformity with the domain model and the informative structures implemented in the storage element 210. Moreover, the interaction grammar of the text generator 280 may include two or more parallel versions to produce the output texts in different languages and/or different levels of a technical language.

Furthermore, the system 200 comprises a network 250, which is connected to the storage element 210, the text analyzer 240, and the output text generator 280. The network 250 may represent any appropriate platform for providing data in an appropriate format to the individual components, wherein the network 250 may provide a temporary connection or a permanent connection, depending on the requirements. For instance, the network, 250 may represent a data BUS in a computer system that enables data transfer between any input/output portions, one or more central processing units, and any storage means required for the operation of the system 200. In other embodiments, the network 250 may represent a wireless communications system that provides for the data transfer between the individual components of the system 200. Moreover, the network 250 may have the capability so as to access a desired input text from a specified source, such as any volatile and nonvolatile storage media, the Internet, and intranet, and the like.

During the operation of the system 200, the storage element 210 provides the linguistic resources, including the informative structures, defined, for instance, in a way as previously explained. Then, a respective input text is provided to the input text analyzer 240, for instance, via the network 250. Based on the linguistic resources, including the informative structures and any structural or lexical equivalencies, the relevant informative structures may be instantiated, wherein application specific requirements and/or user interests may be taken into account as is described above with reference to Figures 1A-1D.

For instance, the analysis may be divided into two stages. In the first stage, the incremental parser of the analyzer 240 may extract syntactic functions such as subject, object, modifier, quantification between the lexical units of the input text. To this end, the incremental parser may be adapted so as to be able to process the whole text without being restricted to a single sentence. Moreover, the incremental parser may have implemented a mechanism for anaphora resolution for possessives and pronouns, which in the present example may be readily accomplished since the toxic product is always the anaphoric referent. Moreover, the incremental parser may then be applied with a new grammar after the general d.ependency analysis, wherein the newly applied grammar combines the previously calculated general syntactic dependencies, properties of derivational morphology, deep syntactic properties, such as passive-active correspondence, verb class alternation, and the like, and domain specific synonymy, thereby producing deep syntactic and normalized relations between lemmas representing the lexical units of the text.

In a second stage of the analysis, the informative structures are instantiated with particular terms. Consequently, these instantiated, informative structures convey the information to be extracted, wherein the task of instantiating is performed on the basis of the results produced by the first stage of analysis. For example, assuming that the informative structure "physical-property" is to be instantiated, and the previous stage of analysis has detected that a linguistic expression denoting a toxic product, say atrazine, is linked to the adjective 'flammable' by the attribute "dependency", the informative structure physical property is instantiated as physical-property (atrazine, burn), since the previously coded structural equivalence assigns the adjective 'flammable' to the verb 'burn'.

After the instantiation of a plurality of informative structures, these structures are conveyed to the output text generator 280 via the network 250 so as to produce one or more desired bodies of texts having respective characteristics with respect to type of language and/or type of terminology and/or format and/or style, and the like, depending on the capabilities and instruction set encoded in the text generator 280. As previously explained, in one embodiment the MDA system from Xerox is implemented in the text generator 280 contains an interaction grammar, wherein the interaction grammar may comprise a realization grammar representing a first set of rules enabling the linguistic realization of the informative structures contained in the domain model. For instance, these rules may be designed so as to produce a short paragraph to describe a particular toxic substance with respect to characteristics such as, what it is, what it looks like, what its origin is, what its synonyms are, what is it used for. A second layer of the interaction grammar may be considered as a domain specific grammar representing a second set of rules encoding the knowledge extracted from the instantiation of the informative structures. In the present example, these rules encode the different characteristics of a given toxic substance to be described. As previously noted, the realization grammar and the domain specific grammar may each be provided in parallel versions so as to produce output texts in different languages, different technical languages, different styles, and the like.

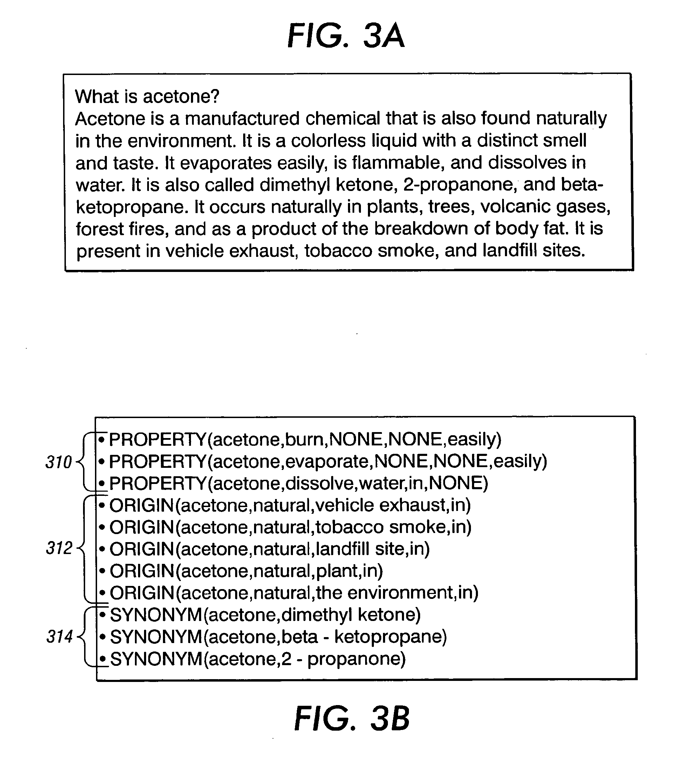

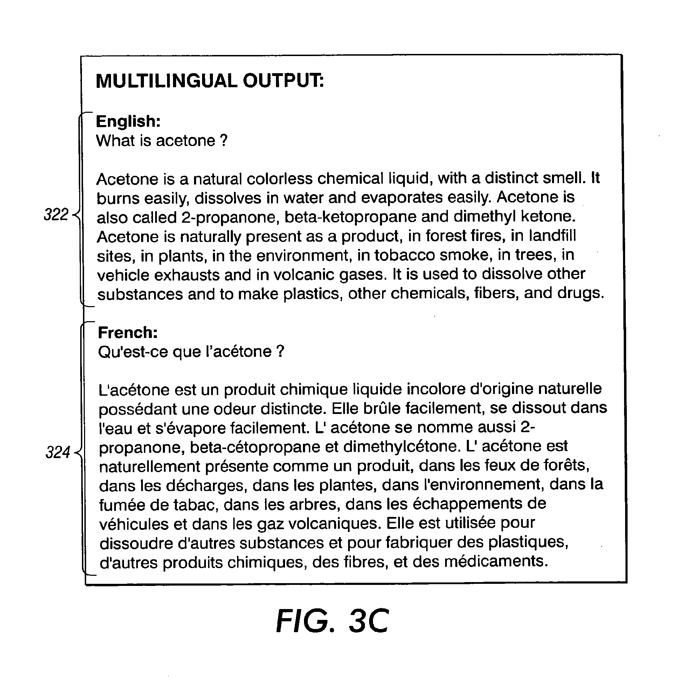

Figures 3A-3C illustrate an example input text and corresponding informative structures and multilingual output text according to one illustrative example of the present invention. More specifically, Figure 3B illustrates examples of instantiated informative structures from input texts shown in Figure 3A. In Figure 3B, three types of informative structures, that is, "property" at 310, "origin" at 312, "synonym" at 3 14, have been defined and are instantiated by the input text analyzer 240 (shown in Figure 2). Due to the plurality of properties, origins, and synonyms, each of the informative structures is instantiated several times, depending on the respective characteristics of the toxic product, wherein some of the informative structures of the same type are only partly instantiated (see for example, the first two informative structures of "property" 310 in Figure 3B). Figure 3C illustrates the corresponding output texts established in part with the informative structures shown in Figure 3B by means of the output text generator 280 (shown in Figure 2), wherein two bodies of text in English at 322 and French at 324 are obtained.

It should be appreciated that the examples illustrated and described above are of illustrative nature only and a variety of modifications may be performed without departing from the principles of the present invention. For instance, the output text generator 280 may provide interactive capabilities so as to enable an amendment of the output text upon request. Also, if an output text is obtained by operating the system 200, which lacks information required, the missing information may be readily introduced by a domain expert interactively editing the output text. The same applies with respect to any amendments regarding linguistic aspects, such as reduction or enrichment of technical terms and the like. Moreover, a plurality of multilingual input texts may be entered, wherein preferably the domain m.odel and the informative structures are adapted to the different languages. For instance, a plurality of sets of informative structures, each set corresponding to a specified language, may be established and the input text analyzer may be provided in a parallel version so as to be able to instantiate the different sets of informative structures. Furthermore, a correlation between the different multilingual sets may be established in advance so that the multilingual sets of instantiated informative structures may be replaced by a single set of informative structures, which then may be processed as previously described.

## Claims

1. A method for generating a reduced body of text from an input text, the method comprising:
establishing a domain model of said input text;
associating at least one linguistic resource with said domain model;
analyzing said input text on the basis of the at least one linguistic resource; and
based on a result of the analysis of said input text, generating said body of text on the basis of said at least one linguistic resource.

2. The method of claim I, wherein said body of text is generated in a language other than a language in which said input text is provided.

3. The method of claim I, wherein said body of text comprises a first sub-body generated in a first language and a second sub-body generated in a second language other than the first language.

4. The method of claim 1, wherein establishing said domain model comprises defining a plurality of concepts and defining one or more relations for at least one of said concepts.

5. The method of claim 4, further comprising:
defining at least one informative structure representing said one or more relations as an linguistic resource;
wherein said at least one informative structure is defined in accordance with a user's interest.

6. The method of claim 4, further comprising selecting one or more informative structures from said at least one informative structure with user input so as to specify information of interest.

7. The method of claim 4, further comprising identifying an equivalence between a first lexical or syntactic structure and a second lexical or syntactic structure, when the first and second lexical or syntactic structures are associated with the same relation of said one or more relations.

8. The method of claim 7, further comprising establishing a representation of said identified equivalence as an element of said at least one linguistic resource.

9. The method of claim 4, further comprising:
defining, by a specified formalism, informative structures representing said one or more relations;
defining, by said specified formalism, structural equivalences associated with said domain model;
parsing said input text by said specified formalism;
normalizing the parses of said input text by said specified formalism according to said defined structural equivalences; and
instantiating one or more of said informative structures by said specified formalism.

10. The method of claim 1, wherein said at least one linguistic resource includes at least one of: one or more lexicons, one or more thesauri, one or more terminological resources and one or more entity recognizers to identify at least one basic concept of said domain model.
